# EUROPÄISCHE PATENTSCHRIFT

(11) **EP 0 531 558 B1**
(45) Veröffentlichungstag und Bekanntmachung des Hinweises auf die Patenterteilung: **15.05.1996**
(21) Anmeldenummer: 91115177.7
(22) Anmeldetag: 09.09.1991
(51) Int. Cl.: B23K 26/04

(54) **Verfahren und Vorrichtung zum Positionieren und Steuern einer Hochleistungsenergiequelle, insbesondere eines Lasers relativ zu einem Werkstück**
Process and device for positioning and controlling a high energy source, in particular a laser relative to a workpiece
Procédé et dispositif de positionnement et de commande d'une source de haute énergie, en particulier d'un laser par rapport à une pièce à usiner

(43) Veröffentlichungstag der Anmeldung: 17.03.1993
(73) Patentinhaber: INPRO INNOVATIONSGESELLSCHAFT FÜR FORTGESCHRITTENE PRODUKTIONSSYSTEME IN DER FAHRZEUGINDUSTRIE MBH, D-10787 Berlin (DE)
(72) Erfinder: Sikora, Ralf, W-1000 Berlin 30 (DE); Päthe, Dieter, W-1000 Berlin 30 (DE)
(74) Vertreter: Hoffmann, Klaus-Dieter, Dipl.-Ing.

(56) Entgegenhaltungen:
- DE-A- 3 626 944
- FR-A- 2 295 476
- JP-A- 1 015 297
- JP-A-61 103 692
- JP-A-61 202 790
- US-A- 4 673 795
- PATENT ABSTRACTS OF JAPAN vol. 13, no. 189 (M-821)(3537) 8. Mai 1989
- PATENT ABSTRACTS OF JAPAN vol. 10, no. 286 (M-521)(2342) 27. September 1986
- PATENT ABSTRACTS OF JAPAN vol. 11, no. 34 (M-558)(2481) 31. Januar 1987
- LASER MAGAZIN April 1990, BAD NENNDORF (DE) Seiten 11 - 14; H. HAFERKAMP ET AL.: 'Abstandssensorik für das Laserschweissen'

## Beschreibung

Die Erfindung betrifft eine Vorrichtung zum Positionieren und Steuern eines Lasers, dessen Laserstrahl über eine in einem verschiebbaren Gehäuse befindliche Optik auf einem Werkstück positionierbar ist, mit einer Beobachtungsoptik, die in Nähe des Lichtweges des Laserstrahls so angeordnet ist, daß Lichtstrahlen, die ihren Ursprung im Umfeld des Auftreffortes des Laserstrahls haben, von einer Beobachtungsoptik erfaßbar sind, die ein zwischen der Beobachtungsebene und dem Auftreffort befindliches optisches Filter aufweist, das in der Beobachtungsebene ein Bild des Auftreffortes relativ zu seinem Umfeld erzeugt, dessen Kontrast die Information zum Positionieren und Steuern des Lasers beinhaltet, wobei im Auftreffort des Laserstrahls auf dem Werkstuck der Winkel zwischen der Richtung des Laserstrahls und der optischen Achse der Beobachtungsoptik im Bereich von 10° - 40° liegt.

Eine bekannte derartige Vorrichtung (FR-A 2 295 476) ist für den Einsatz beim maschinellen Bearbeiten eines Werkstücks z.B. aus Metall entwickelt worden, das z.B. mittels eines Lasers durchbohrt werden soll, der relativ zu dem Werkstück positionierbar und steuerbar ist. Während des Laserbetriebs werden dabei das Umfeld des Auftreffortes des Laserstrahls auf das Werkstück und der Auftreffort selbst beobachtet und dann der Laserstrahl entsprechend dem Beobachtungsergebnis gesteuert, wobei die Beobachtungsrichtung unterschiedlich zur Richtung des Laserstrahls ist und durch optische Filterung in der Beobachtungsebene ein Bild des Auftreffortes relativ zu seinem Umfeld erzeugt wird. Aus dem Kontrast des Bildes wird dann die Information zum Positionieren und Steuern des Lasers ermittelt.

Mittels einer anderen bekannten Vorrichtung ähnlicher Art (DE-OS 36 26 944) wird während des Laserbetriebs ein mindestens ring-sektorförmiges Feld rings um den bzw. koaxial zum Laserstrahl bzw. dessen Auftreffort auf dem Werkstück beobachtet und der Laserstrahl mittels der Optik entsprechend dem Beobachtungsergebnis fokussiert bzw. gesteuert. Vorzugsweise wird dabei das ringförmige Feld mit einem Abbildungslaser geringerer Energie beleuchtet. Die Bildinformation aus dem ringförmigen Feld wird in elektrische Signale umgewandelt (digitalisiert). Mittels einer Datenverarbeitungsanlage werden dann Steuersignale zum Nachführen bzw. Fokussieren des Laserstrahls erzeugt, wenn die Bildinformation von einem vorgegebenen (gespeicherten) Muster bzw. Intensitätswert abweicht. Bei dieser bekannten Vorrichtung sind neben der in einem Gehäuse befindlichen Optik zusätzliche optische Vorrichtungen in der Nähe des Lichtweges des Laserstrahls angeordnet, so daß Lichtstrahlen mit einer dem Laserstrahl im wesentlichen entgegengesetzten Ausbreitungsrichtung, die ihren Ursprung in der Nähe bzw. rings um den Laserstrahl bzw. dessen Auftreffort auf dem Werkstück haben, vom Laserstrahl fort in eine Abbildungsoptik projiziert werden. Der Abbildungsoptik ist eine Fernsehkamera nachgeschaltet, deren Ausgangssignal digitalisiert und in einem Rechner mit dort gespeicherten Bild- und/oder Intensitätswerten bzw. -Informationen in einer Vergleicherschaltung vergleichbar sind. Beim Auftreten von Unterschieden werden dann Steuersignale zum Nachführen bzw. Steuern der Vorrichtung und/oder des Werkstücks abgegeben.

Bekannt ist weiterhin eine Abstandsregulierung zwischen Bearbeitungskopf und Werkstuck beim sogenannten Lasertiefschweißen (Laser Magazin 4/90, Seite 11 bis 14, Artikel "Abstandssensorik für das Laserschweißen", H. Haferkamp, R. Benecke), bei dem eine optische Entkoppelung von laserinduziertem Plasma und Abstandsmeßlaser über bestehende Regelkreise und Software Pakete erfolgt. Da die Intensität der Plasmastrahlung relativ zur Intensität der Meßlaserstrahlung sehr groß ist und starken Schwankungen unterworfen ist, wird der Empfänger des Meßlasers von der Plasmastrahlung entkoppelt, indem der Meßstrahl von der Plasmastrahlung durch ein einfaches Blech abgeschirmt wird, das zwischen Sensor und Schweißwirkstelle an den Bearbeitungskopf adaptiert ist. Untersuchungen zur Abstandsmessung während des Schweißprozesses wurden mit einem Lasermeßkopf durchgeführt, dessen Meßprinzip die Triangulation darstellt. Bei diesem Triangulationsprinzip erscheint die durch eine Optik abgebildete Lichtquelle als diffus strahlender Lichtpunkt auf der Meßgut-Oberfläche. Dieser Lichtpunkt wird wiederum über eine zweite Optik auf einen Photodetektor abgebildet. Jedes Nähern oder Entfernen des Meßobjektes gegenüber der Meßsonde hat eine Verschiebung des Bildpunktes auf dem Photodetektor zur Folge, so daß aufgrund des bekannten Signals des Photodetektors die Position des Meßobjektes genau erfaßbar ist.

Der Erfindung liegt die Aufgabe zugrunde, eine Vorrichtung der eingangs erwähnten Art anzugeben, mit der ein Laser auf verhältnismäßig einfache Weise äußerst exakt relativ zu einem Werkstück positioniert und gesteuert werden kann. So soll z.B. für das Schweißen oder Schneiden von Werkstücken eine derartige Vorrichtung in effektiver Weise einsetzbar sein. Zur Nahtführung beim Schweißen mit einem Laser wird ein Meßprinzip angestrebt, mit dem die Kante einer Nahtkontur und der Schweißpunkt eindeutig detektiert und die seitliche Abweichung des Schweißpunktes im Verlauf berechnet werden kann.

Diese Aufgabe wird erfindungsgemäß dadurch gelöst, daß das optische Filter ein zweigeteiltes optisches Filter ist, das eine Polarisationsgrundfolie aufweist, auf der mit jeweils unterschiedlicher Winkelstellung zur Grundfolie zwei Polarisationsfolien so aufgebracht sind, daß ein erstes Filtersegment mit verhältnismäßig niedrigem Transmissionsgrad und ein zweites Filtersegment mit einem den Reflexionsverhältnissen am Werkstück angepaßten Transmissionsgrad gegeben ist.

Vorzugsweise sind die Filtersegmente gleich groß. Das erste Filtersegment kann z.B. auch einen kreisförmigen Grundriß mit verhältnismäßig kleinem Durchmesser aufweisen.

Die Beobachtungsoptik weist vorzugsweise eine CCD-Kamera auf, vor deren Objektiv das zweigeteilte Filter angeordnet ist, wobei die CCD-Kamera mit einem Monitor gekoppelt ist. Die Beobachtungsoptik kann mit einer automatischen Bildverarbeitung sowie mit einem Videorecorder gekoppelt sein.

Die erfindungsgemäße Vorrichtung hat sich als besonders geeignet beim Schweißen von Nahtstrukturen an Pkw-Karosserieteilen mittels einer Festkörperlaseranlage hoher Leistung und eines Industrie-Gelenkroboters erwiesen, wobei die Laserstrahlübertragung über flexible Lichtleitkabel erfolgte. Angestrebt wurde eine vollständige Verschweißung der Naht mit maximaler Bahngeschwindigkeit bei vorgegebenen Qualitätskriterien.

Die Laseroptik und CCD-Kamera der erfindungsgemäßen Vorrichtung sind in der Praxis in einem Bearbeitungskopf gehaltert, der auch eine Gasdüse und eine Beleuchtungsquelle aufweist und entlang der zu verschweißenden Kontur geführt wird. Um die Naht ohne Unterbrechung schweißen zu können, ist die optische Achse der Laseroptik in der Verlängerung der 6. Roboterachse gelegt, so daß ein schnelles Umorientieren des Bearbeitungskopfes möglich ist.

Mit der erfindungsgemäßen Vorrichtung kann in vorteilhafter Weise während der Schweißung der Vorlauf der Nahtkontur erfaßt werden, und zwar mit Hilfe der CCD-Kamera und des zwischen der Beobachtungsebene und dem Auftreffort befindlichen optischen Filters, z.B. des zweigeteilten optischen Filters. Dieses optische Filter verhindert eine Überstrahlung des Bildes durch die hohe Lichtintensität der beim Schweißen auftretenden Plasmafackel.

Um dennoch den Auftreffort des Lasers, in dem die Werkstückoberfläche von letzterem aufgeschmolzen ist, erkennen zu können, wird das Bild vorzugsweise in zwei Segmente geteilt. Das Segment, das direkt durch die Plasmafackel bestrahlt wird, erfordert ein Filter mit niedrigem Transmissionsgrad. Hierdurch ist die Erkennung des Schmelzpunktes (Auftreffort) möglich. Durch einen Lagevergleich mit einer Referenzmarke kann der Arbeitsabstand des Bearbeitungskopfes kontrolliert werden. Eine Erkennung der Nahtkontur ist in diesem Bereich nicht möglich.

Um die laterale Abweichung zwischen dem Auftreffort (Arbeitspunkt) und der Nahtkontur ermitteln zu können, ist das zweite Filtersegment erforderlich. In diesem Segment erfolgt die Erkennung der Nahtkontur im Vorlauf. Zur Realisierung einer automatischen Kantenerkennung mittels Bildverarbeitung muß der Transmissionsgrad dieses Bildbereiches entsprechend den Reflexionsverhältnissen am Werkstück angepaßt werden. Die jeweilige geometrische Form der beiden Filtersegmente wird durch die beiden zuvor beschriebenen Bildbereiche bestimmt. Das optische Filter ist vorzugsweise vor dem Objektiv der CCD-Kamera angeordnet.

Die Erfindung wird nun anhand der Zeichnungen erläutert. In diesen sind:
- Fig. 1: eine schematische Darstellung der mit einem Roboter gekoppelten erfindungsgemäßen Vorrichtung, aus der die Bestimmung des Abstandes des Lasers von dem Werkstück bei der Programmierung des Roboters hervorgeht,
- Fig. 2: eine schematische Darstellung der mit dem Roboter gekoppelten erfindungsgemäßen Vorrichtung, aus der die Ermittlung der Korrekturwerte bei seitlichen Abweichungen des Auftreffortes (Arbeitspunktes) von der Naht hervorgeht,
- Fig. 3: ein Aufriß einer Ausführungsform eines zweigeteilten optischen Filters,
- Fig. 4: eine Draufsicht auf das optische Filter gemäß Fig. 3,
- Fig. 5: eine Draufsicht auf eine andere Ausführungsform des optischen Filters, und
- Fig. 6: ein Bildausschnitt eines Kamerabildes von einem Schweißprozeß.

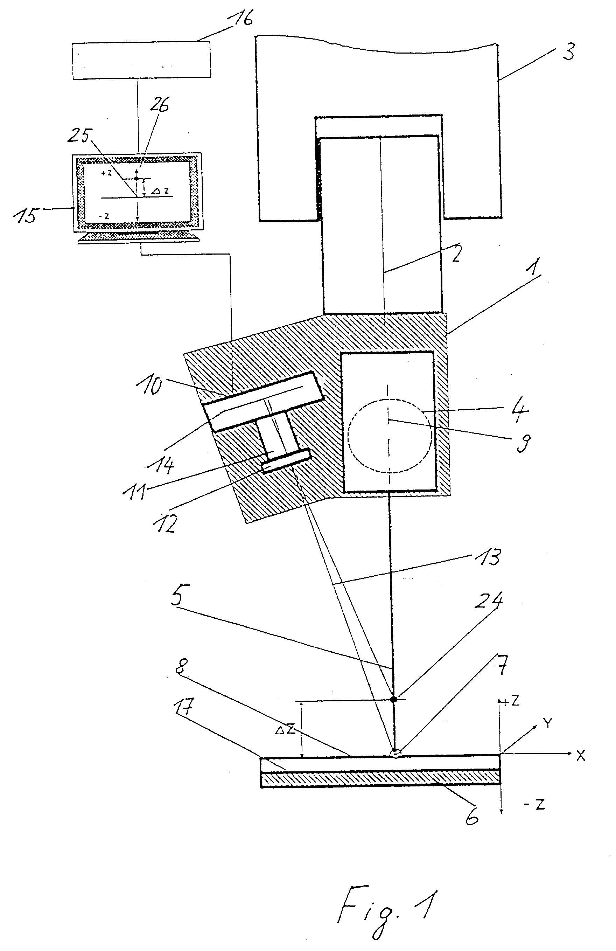

Wie aus Fig. 1 hervorgeht, ist in einem Gehäuse 1 eines an der 6. Achse 2 eines Roboters 3 gehalterten Bearbeitungskopfes eine Laseroptik 4 vorgesehen, die einem nicht dargestellten Arbeitslaser, z.B. einem HeNe-Laser zugeordnet ist und einen Laserstrahl 5 auf ein Werkstück 6, z.B. ein Blech, lenkt, der im Ort 7 auf die Blechoberfläche 8 auftrifft. Der Roboter 3 ist mit einer nicht dargestellten Robotersteuerung verbunden, die durch binäre Ausgänge mit der Steuerung des Lasers verknüpft ist. Durch diese Verbindung kann der Verschluß (Shutter) des Lasers geöffnet bzw. geschlossen werden. Die Druckluft zum Schweißen wird ebenfalls durch einen binären Ausgang der Robotersteuerung ein- bzw. ausgeschaltet. Das Gehäuse 1 des Bearbeitungskopfes ist so an der 6. Roboterachse 2 gehaltert, daß die Laseroptik 4 in der Verlängerung der 6. Roboterachse liegt. Dadurch ist ein schnelles Umorientieren des Bearbeitungskopfes um die optische Achse 9 möglich. Der Bearbeitungskopf weist weiter eine Beobachtungsoptik 10 in Form einer CCD-Kamera auf, vor deren Objektiv 11 ein optisches Filter 12 angeordnet ist. Die Beobachtungsoptik 10 ist derart zur Richtung des Laserstrahls 5 angeordnet, daß im Auftreffort 7 des Laserstrahls 5 auf dem Werkstück 6 der Winkel zwischen der Richtung des Laserstrahls 5 und der optischen Achse 13 der Beobachtungsoptik 10 im Bereich von 10° bis 40° liegt. Das zwischen der Beobachtungsebene 14 der CCD-Kamera 10 und dem Auftreffort 7 liegende optische Filter 12 erzeugt in der Beobachtungsebene 14 ein Bild des Auftreffortes 7 relativ zu seinem Umfeld, dessen Kontrast die Information zum Positionieren und Steuern des Lasers beinhaltet.

Die CCD-Kamera 10 ist mit einem Monitor 15 gekoppelt, der seinerseits mit einem Videorecorder 16 gekoppelt ist.

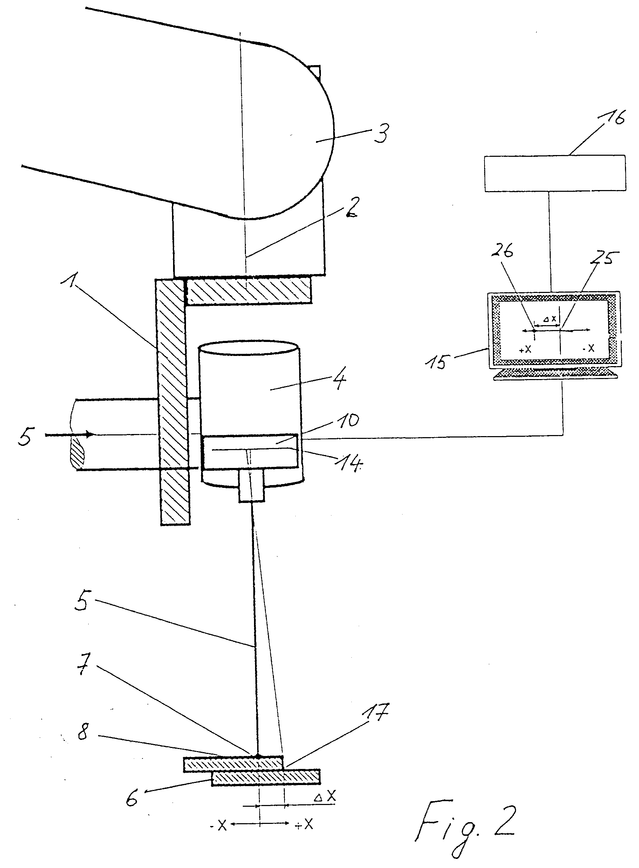

Aus Fig. 2, die die Zuordnung der Vorrichtung zum Positionieren und Steuern des Lasers zum Roboter und Werkstück um 90° versetzt im Vergleich zur Darstellung gemäß Fig. 1 zeigt, geht die zu verschweißende Naht 17 deutlich hervor. Hierbei kann es sich um eine umlaufende Kehlnaht handeln, die durch Falzverbindung von Außen- und Innenhaut an Pkw-Türen entsteht und die über ihren Umlauf hermetisch verschweißt werden soll.

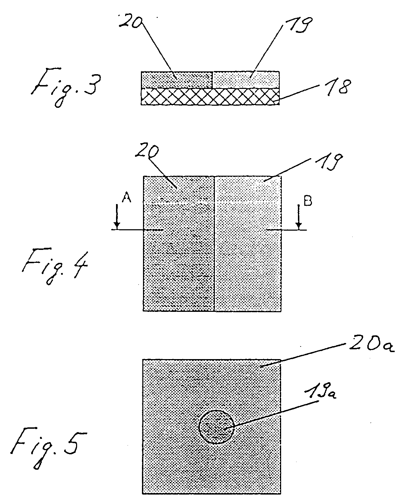

Aus den Fig. 3 und 4 geht im Aufriß bzw. in der Draufsicht eine Ausführungsform des optischen Filters 12 in Form eines zweigeteilten optischen Filters hervor, der gemäß Fig. 1 und 2 vor dem Objektiv 11 der CCD-Kamera 10 angeordnet ist. Auf einer rechteckigen Polarisationsgrundfolie 18 sind zwei Polarisationsfolien mit jeweils unterschiedlicher Winkelstellung zur Polarisationsgrundfolie 18 derart aufgeklebt, daß ein erstes rechteckiges Filtersegment 19 mit verhältnismäßig niedrigem Transmissionsgrad und ein flächengleiches zweites Filtersegment 20 mit einem den Reflexionsverhältnissen am Werkstück angepaßten Transmissionsgrad gegeben ist.

Mit Hilfe der CCD-Kamera 10 und des optisch zweigeteilten Filters 12 kann z.B. eine Schweißung aufgenommen und als Graubild in einem Rechner ausgewertet werden. Während des Laserbetriebs wird der Laserstrahl zugleich als Arbeitsstrahl und als Meßstrahl verwendet, die Beobachtungsrichtung unterschiedlich zur Richtung des Laserstrahls gewählt (bei der in Fig. 1 dargestellten Anordnung beträgt der Winkel etwa 20°) und das Umfeld des Auftreffortes des Laserstrahls auf dem Werkstück sowie auch der Auftreffort des Laserstrahls auf dem Werkstück selbst beobachtet, und zwar mit Hilfe der CCD-Kamera 10 und des optisch zweigeteilten Filters 12, wobei die Plasmafackel während des Laserbetriebs zur Beleuchtung verwendet wird.

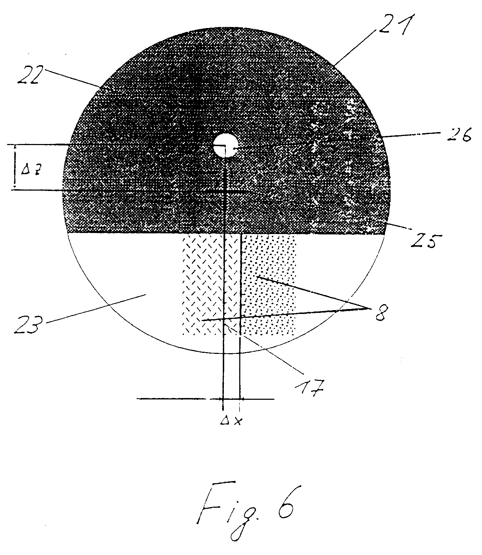

Fig. 6 zeigt einen Bildausschnitt 21 eines in der Beobachtungsebene 14 der CCD-Kamera 10 erhaltenen Bilder vom Schweißprozeß, wobei der Bildausschnitt 21 durch die optische Filterung einen dunkleren Bereich 22 und einen helleren Bereich 23 aufweist. Der dunklere Bereich 22 des Bildausschnittes 21 entsteht durch das direkt von der Plasmafackel bestrahlte Filtersegment mit verhältnismäßig niedrigem Transmissionsgrad, so daß ein Erfassen des Auftreffortes 7 des Laserstrahls 5 auf dem Werkstück 6 möglich ist. Ein Erkennen der Nahtkontur ist in diesem Bereich nicht möglich. Bei einem gewählten Arbeitspunkt 7, der sich in Fig. 1 im Ursprung des dreidimensionalen Koordinatensystems befindet, wird mit Hilfe einer Referenzmarke 25 die Lage des vom Laser erzeugten Leuchtfleckes 26 auf der Abbildungsebene 14 der CCD-Kamera 10 markiert. Die Lage des vom Laserstrahl 6 erzeugten, die Abbildung des Auftreffortes 7 des Laserstrahls 5 auf das Werkstück 6 darstellenden Leuchtfleckes 26 auf der Abbildungsebene 14 der CCD-Kamera 10, und zwar im dunkleren Bereich 22 des Bildausschnittes 21, ist abhängig vom Abstand des Bearbeitungskopfes von der Oberfläche 8 des Werkstückes 6. Weicht beim Abfahren der Bewegungsbahn des Lasers der Leuchtfleck 26 auf dem Monitor 15 von der Referenzmarke 25 ab, so liegt die Werkstückoberfläche um Δz nach oben verschoben und erzeugt den Leuchtfleck 24. Der Abstand muß an diesen Stellen korrigiert werden. In dem dunkleren Bereich 22 des Bildausschnittes 21 kann der Abstand Δz zwischen dem Auftreffort 7 des Laserstrahls 5 auf das Werkstück 6 und dem Arbeitspunkt 24 durch das Triangulationsverfahren bestimmt werden, da der Abstand des Leuchtfleckes 26 zur Referenzmarke 25 ein Maß für diesen Abstand ist. Der ermittelte Abstand Δz wird an die Steuerung des Roboters 3 übermittelt und durch eine entsprechende Korrekturbewegung des Roboters 3 ausgeglichen.

Der hellere Bereich 23 des Bildausschnittes 21 gemäß Fig. 6 wird von dem zweiten Filtersegment 20 erzeugt, dessen Transmissionsgrad den Reflexionsverhältnissen am Werkstück 6 angepaßt ist und durch das die Erkennung der Nahtkontur 17 beim Schweißprozeß im Vorlauf möglich ist. Das zweite Filtersegment 20 ist erforderlich, um die seitliche Abweichung Δx zwischen dem Auftreffort 7 (Arbeitspunkt) das Laserstrahls 5 auf der Blechoberfläche 8 und der Nahtkontur 17 ermitteln zu können. Im helleren, in Vorlaufrichtung liegenden Bereich 23 des Bildausschnittes 21 gemäß Fig. 6 ist die zu verschweißende Blechkante eindeutig zu erkennen. Nach Auswertung der Kontraste des aufgenommenen Bildes im Rechner läßt sich die Lage der Blechkante zu der Referenzmarke 25 ermitteln.

Die Kante wird als ein Schatten auf hellem Hintergrund abgebildet. Liegt die Abbildung des Auftreffortes (Leuchtfleck) des Laserstrahls auf diesem Schatten, liegt keine seitliche Abweichung des Auftreffortes 7 vor. Da die zulässigen seitlichen Abweichungen nur ca. ± 0,1 mm betragen und sich wesentlich sprunghafter ändern, ist eine zusätzliche Verfahreinheit angebracht. Wie aus Fig. 2 hervorgeht, ist dort der Abstand des Bearbeitungskopfes von der Blechoberfläche 8 gleich dem gewählten Arbeitsabstand, da auf dem Monitor 15 die Referenzmarke 25 und die Abbildung des Auftreffortes (Leuchtfleck) übereinander liegen. Wird eine seitliche Abweichung Δx wie in Fig. 2 auf dem Monitor 15 erkannt, so wird die Bewegungsbahn des Laserarbeitspunktes entsprechend korrigiert.

Fig. 5 zeigt in Draufsicht eine andere Ausführungsform des optisch zweigeteilten Filters, wobei das erste Filtersegment 19a einen kreisförmigen Grundriß mit verhältnismäßig kleinem Durchmesser und das zweite Filtersegment 20a einen quadratischen Grundriß aufweisen.

Die jeweilige geometrische Form der auf Polarisationsgrundfolie 18 aufgeklebten Polarisationsfolien wird durch die beiden im Zusammenhang mit Fig. 6 beschriebenen Bildbereiche bestimmt.

Das Verfahren und die Vorrichtung zum Positionieren und Steuern eines Lasers haben sich beim Schweißen der umlaufenden Kehlnaht am Falz von Pkw-Türen mittels einer Festkörperanlage hoher Leistung und eines Industrie-Gelenkroboters bewährt, indem auf einfache und exakte Weise bei der Programmierung der Bewegungsbahn des Roboters der Abstand des Bearbeitungskopfes zur Blechoberfläche und die seitliche Abweichung zur Naht bestimmt wurden.

Die Programmierung der Bewegungsbahn des Roboters läßt sich in drei Schritte unterteilen. Zunächst wurde ein Rohprogramm erstellt, in dem die grobe Bewegungsbahn des Roboters festgelegt wurde. Im Programmkopf wurden Ausgangswerte gesetzt und Schnittstellen deklariert. In der Bearbeitungsschleife wurde die Roboterbewegung zum Werkstück, die grobe Bewegungsbahn entlang der zu verschweißenden Naht und das Zurücksetzen des Roboters in seine Ausgangsstellung programmiert. Hierbei waren die Steuersignale zum Ein-, Um- bzw. Ausschalten der Hochleistungsenergiequelle enthalten.

Im nächsten Schritt erfolgte eine Verfeinerung des Bahnprogramms, bei der der Laserarbeitspunkt genau entlang der zu verschweißenden Naht programmiert wurde. Da der Laserarbeitspunkt ohne Hilfsmittel nicht erkennbar war, wurde die Wellenlänge des zunächst allein als Meßstrahl verwendeten Laserstrahls im sichtbaren Bereich gewählt. Der Meßstrahl bildete einen Leuchtfleck auf der Werkstückoberfläche ab, der mit hinreichender Genauigkeit der Lage des Laserarbeitspunktes entsprach. Mit Hilfe des beschriebenen Verfahrens war dann die Erkennung von Abweichungen des Arbeitspunktes von der Naht, eine Ermittlung der Korrekturwerte bei der Abstandsänderung und ein Erkennen der seitlichen Abweichungen des Arbeitspunktes von der Naht gegeben.

Im dritten Schritt erfolgte das Abfahren des Bahnprogramms mit der tatsächlichen Bearbeitungsgeschwindigkeit. Dabei wurde die Lage des Leuchtflecks und der Referenzmarke auf der Blechoberfläche mit dem mit der Beobachtungsoptik 10 und dem Monitor 15 gekoppelten Videorecorder 16 (Fig. 1 und 2) aufgenommen. Bei der Betrachtung der Videoaufnahme in Zeitlupe konnten die dynamischen Fehler des Roboters, d.h. seine Abweichungen von der programmierten Bewegungsbahn mit dem beschriebenen Verfahren erkannt werden. Durch eine Korrektur einzelner Bahnpunkte um den Betrag der dynamischen Abweichung in entgegengesetzter Richtung wurde die endgültige Bewegungsbahn des Roboters für das Werkstück erhalten.

### Liste der Bezugszeichen

- 1: Gehäuse des Bearbeitungskopfes
- 2: 6. Achse des Roboters
- 3: Roboter
- 4: Laseroptik
- 5: Laserstrahl
- 6: Werkstück
- 7: Auftreffort des Laserstrahls
- 8: Blechoberfläche
- 9: mittlere optische Achse
- 10: Beobachtungsoptik, CCD-Kamera
- 11: Objektiv der CCD-Kamera
- 12: optisches Filter, zweigeteiltes Filter
- 13: optische Achse der Beobachtungsoptik
- 14: Beobachtungsebene
- 15: Monitor
- 16: Videorecorder
- 17: Nahtkontur
- 18: Polarisationsgrundfolie
- 19,19a: erstes Filtersegment
- 20,20a: zweites Filtersegment
- 21: Bildausschnitt
- 22: dunklerer Bereich
- 23: hellerer Bereich
- 24: gewählter Arbeitspunkt
- 25: Referenzmarke
- 26: Leuchtfleck

## Patentansprüche

1. Vorrichtung zum Positionieren und Steuern eines Lasers, dessen Laserstrahl über eine in einem verschiebbaren Gehäuse befindliche Optik auf einem Werkstück positionierbar ist, mit einer Beobachtungsoptik, die in Nähe des Lichtweges des Laserstrahls so angeordnet ist, daß Lichtstrahlen, die ihren Ursprung im Umfeld des Auftreffortes des Laserstrahls haben, von einer Beobachtungsoptik erfaßbar sind, die ein zwischen der Beobachtungsebene und dem Auftreffort befindliches optisches Filter aufweist, das in der Beobachtungsebene ein Bild des Auftreffortes relativ zu seinem Umfeld erzeugt, dessen Kontrast die Information zum Positionieren und steuern des Lasers beinhaltet, wobei im Auftreffort des Laserstrahls auf dem Werkstück der Winkel zwischen der Richtung des Laserstrahls und der optischen Achse der Beobachtungsoptik im Bereich von 10° - 40° liegt, dadurch gekennzeichnet, daß das optische Filter (12) ein zweigeteiltes optisches Filter ist, das eine Polarisationsgrundfolie (18) aufweist, auf der mit jeweils unterschiedlicher Winkelstellung zur Grundfolie (18) zwei Polarisationsfolien so aufgebracht sind, daß ein erstes Filtersegment (19, 19a) mit verhältnismäßig niedrigem Transmissionsgrad und ein zweites Filtersegment (20, 20a) mit einem den Reflexionsverhältnissen am Werkstück (6) angepaßten Transmissionsgrad gegeben ist.

2. Vorrichtung nach Anspruch 1, dadurch gekennzeichnet, daß die Filtersegmente (19, 20) gleich groß sind (Fig. 4).

3. Vorrichtung nach Anspruch 1, dadurch gekennzeichnet, daß das erste Filtersegment (19a) einen kreisförmigen Grundriß mit verhältnismäßig kleinem Durchmesser aufweist (Fig. 5).

4. Vorrichtung nach Anspruch 1 bis 3, dadurch gekennzeichnet, daß die Beobachtungsoptik (10) eine CCD-Kamera (11) aufweist, vor deren Objektiv das zweigeteilte Filter (12) angeordnet ist, und daß die CCD-Kamera mit einem Monitor (15) gekoppelt ist.

5. Vorrichtung nach Anspruch 1 bis 4, dadurch gekennzeichnet, daß die Beobachtungsoptik (10) mit einer automatischen Bildverarbeitung gekoppelt ist.

6. Vorrichtung nach Anspruch 1 bis 5, dadurch gekennzeichnet, daß die Beobachtungsvorrichtung (10) mit einem Videorecorder (16) gekoppelt ist.

## Claims

1. Device for positioning and controlling a laser,the beam of which is positionable on a workpiece through optical means provided in a movable housing comprising observation optics so positioned in the nearness of the light-path of the laser that the lightbeams originated from the impignement spot of the laser are detectable by the observation optics having an optical filter between the observation plane and the impignement spot, which produces an image of the impignement spot relative to its surrounding area within the oberservation plane with a contrast which includes the information for positioning and controlling the laser, and with the angle between the direction of the laserbeam and the optical axis at the impignement spot of the laserbeam on the workpiece being in the range of 10° to 40°,
characterized in, that
the optical filter (12) is an optical filter divided into two parts and comprises a polarizing-basefoil (18) on which two polarizing foils are placed each with a different angle position in relation to the basefoil (18) in a manner, that a first filtersegment (19, 19a) with a relative low transmission factor and a second filtersegment (20, 20a) with a transmission factor, which is adapted to the reflection relations at the workpiece, are existing.

2. Device according to claim 1, characterized in that the filtersegments (19, 20) have equal size (fig. 4).

3. Device according to claim 1, characterized in that the first filtersegment (19a) has a circular ground plan with a relative small diameter (fig. 5).

4. Device according to claims 1 to 3,characterized in that the observation optics (10) comprise a CCD-camera (11), that the filter divided into two parts (12) is placed in front of the objective of the observation optics,and that the CCD-camera (11) is coupled with a monitor (15).

5. Device according to claims 1 to 4,characterized in that the observation optics (10) is coupled with an automatic image processing.

6. Device according to claims 1 to 5,characterised in that the observation means(10) are coupled with a videorecorder (16).

## Revendications

1. Dispositif pour le positionnement et la commande d'un laser dont le rayon laser est positionnable sur une pièce à travailler moyennant une optique disposée dans un boîtier à coulisse, avec une optique d'observation disposée à proximité du trajet de lumière du rayon laser de sorte que des rayons de lumière ayant leur origine dans l'environnement du point de rencontre du rayon laser peuvent être salsis par une optique d'observation munie d'un filtre optique disposé entre le plan d'observation et le point de rencontre produisant dans le plan d'observation une image du point de rencontre relativement à son environnement dont le contraste comprend l'information pour le positionnement et la commande du laser, l'angle entre la direction du rayon laser et l'axe optique de l'optique d'observation dans le point de rencontre du rayon laser sur la pièce à travailler se situant dans le domaine de 10° - 40°, caractérisé par le fait que le filtre optique (12) est un filtre optique divisé en deux présentant une feuille de base de polarisation (18) sur laquelle sont disposées deux feuilles de polarisation avec chacune une position d'angle différente par rapport à la feuille de base (18) de sorte qu'il est donné un premier segment de filtration (19, 19a) avec un degré de transmission relativement faible et un deuxième segment de filtration (20, 20a) avec un degré de transmission adapté aux conditions de réflexion à la pièce à travailler (6).

2. Dispositif suivant revendication 1 caractérisé par le fait que les sements de filtration (19, 20) sont égaux (fig. 4).

3. Dispositif suivant revendication 1 caractérisé par le fait que le premier segment de filtration (19a) présente un plan circulaire avec un diamètre relativement petit (fig. 5).

4. Dispositif suivant revendications 1 à 3 caractérisé par le fait que l'optique d'observation (10) présente une caméra CCD (11) devant l'objectif de laquelle est disposé le filtre divisé en deux (12) et que la caméra CCD est accouplée à un moniteur (15).

5. Dispositif suivant revendications 1 à 4 caractérisé par le fait que l'optique d'observation (10) est accouplée à un dispositif de transformation d'image automatique.

6. Dispositif suivant revendications 1 à 5 caractérisé par le fait que le dispositif d'observation (10) est accouplé à un magnétoscope (16).
